# EUROPÄISCHE PATENTSCHRIFT

(11) **EP 0 517 043 B1**
(45) Veröffentlichungstag und Bekanntmachung des Hinweises auf die Patenterteilung: **31.07.1996**
(21) Anmeldenummer: 92108643.5
(22) Anmeldetag: 22.05.1992
(51) Int. Cl.: C08G 18/08, C08G 18/28, C08K 3/22, C09D 175/04, C08G 18/48

(54) **Wässriges Beschichtungsmittel und seine Verwendung**
Aqueous coating and its use
Revêtement aqueux et son utilisation

(30) Priorität: 04.06.1991 DE 4118231
(43) Veröffentlichungstag der Anmeldung: 09.12.1992
(73) Patentinhaber: BAYER AG, 51368 Leverkusen (DE)
(72) Erfinder: Gruber, Hermann, Dr., W-5090 Leverkusen 1 (DE); Reiff, Helmut, Dr., W-5090 Leverkusen 1 (DE); Kober, Hermann, W-5060 Bergisch Gladbach 2 (DE)

(56) Entgegenhaltungen:
- EP-A- 0 013 112
- EP-A- 0 161 479
- EP-A- 0 206 059
- EP-A- 0 383 492

## Beschreibung

Die Erfindung betrifft ein neues wäßriges Beschichtungsmittel auf Basis von organischen Polyhydroxylverbindungen und organischen Polyisocyanaten mit freien Isocyanatgruppen und die Verwendung dieses Beschichtungsmittels zur Beschichtung von mineralischen Substraten.

Die Reduzierung organischer Lösungsmittelanteile in Lacken und Beschichtungsmitteln ist in vielen Bereichen aus ökologischen und arbeitshygienischen Gründen ein aktuelles Problem. Der Ersatz organischer Lösungsmittel durch Wasser ist daher für die moderne Beschichtungstechnik von großer Bedeutung.

Die bislang bekannt gewordenen, wäßrigen Zweikomponenten-Polyurethanlacke basieren vor allem auf blockierten Polyisocyanaten, da man bislang davon ausging, daß Polyisocyanate mit freien Isocyanatgruppen in derartigen Lacksystemen nicht einsetzbar sein würden, weil zu erwarten war, daß die Polyisocyanate mit dem im hohen Überschuß vorliegenden Wasser und nicht selektiv mit den in derartigen Lacksystemen stets als wesentliche Bindemittelkomponente vorliegenden organischen Polyhydroxylverbindungen abreagieren würden. Wäßrige Lacke auf Basis von blockierten Polyisocyanaten sind beispielsweise in DE-OS 2 507 842 oder DE-OS 2 507 884 beschrieben. Eine Ausnahme von der genannten Regel stellen die System der DE-OS 3 829 587 dar. Bei den in dieser Veröffentlichung beschriebenen wäßrigen Lacken handelt es sich in der Tat um solche, die neben organischen Polyhydroxylverbindungen Polyisocyanate mit freien Isocyanatgruppen enthalten. Die selektiven Reaktionen der Polyisocyanate mit den neben einem hohen Wasserüberschuß vorliegenden organischen Polyhydroxylverbindungen ist auf die ganz spezielle Natur dieser Polyhydroxylverbindungen zurückzuführen.

EP-A-0 161 479 beschreibt Beschichtungsmittel aus Polyisocyanat, Polyol, Hilfs-und Zusatzstoffen, wasser, glycerin und Erdalkali(hydr)oxiden. Als Polyisocyanat eignen sich beliebige, bei Raumtemperatur flüssige organische Polyisocyanate.

Überraschenderweise wurde jetzt ein völlig neuartiges wäßriges Lacksystem auf Basis von organischen Polyisocyanaten und organischen Polyhydroxylverbindungen aufgefunden, welches als wesentliche Bindemittelkomponenten in Wasser lösliche Polyetherpolyole, nichtionischhydrophil modifizierte Polyisocyanate und Magnesiumoxid bzw. -hydroxid enthält. Das nachstehend naher beschriebene erfindungsgemäße Beschichtungsmittel eignet sich insbesondere zur Beschichtung von mineralischen Substraten wie beispielsweise Mauerwerk, Beton, Gips, u.dgl.

Gegenstand der Erfindung ist ein Beschichtungsmittel bestehend im wesentlichen aus
A) 100 Gew.-Teilen einer wasserlöslichen Polyether-Komponente einer (mittleren) Hydroxylfunktionalität von mindestens 2,5 und einer (mittleren) Hydroxylzahl von 100 bis 600, bestehend aus mindestens einem Polyetherpolyol,
B) 40 bis 240 Gew.-Teilen einer wasserlöslichen oder -dispergierbaren Polyisocyanat-Komponente, bestehend aus mindestens einem nichtionisch-hydrophil modifizierten organischen Polyisocyanat mit (cyclo)aliphatisch gebundenen Isocyanatgruppen,
C) 10 bis 50 Gew.-Teilen Magnesiumoxid und/oder -hydroxid in feindisperser Form,
D) 50 bis 150 Gew.-Teilen Wasser
   und gegebenenfalls
E) weiteren Hilfs- und Zusatzmitteln der Lacktechnologie.

Gegenstand der Erfindung ist auch die Verwendung dieses Beschichtungsmittels zur Beschichtung von mineralischen Substraten.

In den erfindungsgemäßen Beschichtungsmitteln liegen pro 100 Gew.-Teilen der Komponente A) 40 bis 240, vorzugsweise 100 bis 200 Gew.-Teile der Komponente B), 10 bis 50, vorzugsweise 20 bis 30 Gew.-Teile der Komponente C), 50 bis 150, vorzugsweise 100 bis 120 Gew.-Teile der Komponente D) und außerdem gegebenenfalls die aus der Lacktechnologie üblichen Hilfs- und Zusatzmittel vor.

Bei der Komponente A) handelt es sich um eine Polyetherkomponente einer (mittleren) Hydroxylfunktionalität von mindestens 2,5, vorzugsweise von 2,5 bis 5, eines Hydroxylzahlbereichs von 100 bis 600, vorzugsweise von 300 bis 500, bestehend aus mindestens einem Polyetherpolyol.

Bei den Polyetherpolyolen der Komponente A) handelt es sich vorzugsweise um Propoxylierungsprodukte geeigneter Startermoleküle bzw. Startermolekül-Gemische wie beispielsweise die Propoxylierungsprodukte von Trimethylolpropan, Triethanolamin, Zucker/Ethylenglykol, Ethylendiamin, Sorbit/Glycerin oder Sorbit/Propylenglykol, wobei die (mittlere) Hydroxylfunktionalität der Startermoleküle bzw. Startermolekül-Gemische in erster Näherung der Hydroxylfunktionalität der resultierenden Polyetherpolyole entspricht, d.h. die Funktionalität der Starter wird entsprechend der gewünschten Funktionalität des Polyetherpolyols ausgewählt. Wegen des hohen Hydroxylgruppengehalts und des vergleichsweise niedrigen Molekulargewichts handelt es sich bei den beispielhaft genannten Propoxylierungsprodukten um wasserlösliche Poly etherpolyole, die zur Herstellung der Wasserlöslichkeit keiner weiteren Hydrophilierung bedürfen. Grundsätzlich möglich ist jedoch auch die (Mit)verwendung von hydrophil modifizierten Polyetherpolyolen, insbesondere solchen, bei deren Herstellung anstelle oder neben Propylenoxid auch Ethylenoxid eingesetzt worden ist.

Wesentlich ist nicht die Art der Herstellung der Polyetherpolyole sondern die Einhaltung der oben genannten Kenndaten.

Bei der Komponente B) handelt es sich um nichtionischhydrophil modifizierte Polyisocyanate einer (mittleren) NCO-Funktionalität von 2,0 bis 3,5 der beispielsweise in DE-OS 3 521 618 genannten Art. Besonders bevorzugt handelt es sich bei der Komponente B) um, diesen Ausführungen entsprechende, Umsetzungsprodukte von (i) ein- oder mehrwertigen, Polyalkylenether-Alkoholen mit mindestens einer, mindestens 10 Ethylenoxideinheiten aufweisenden, Polyetherkette mit (ii) Isocyanuratgruppen aufweisenden Polyisocyanaten auf Basis von 1,6-Diisocyanatohexan, und/oder von 1-Isocyanato-3,3,5-trimethyl-5-isocyanatomethylcyclohexan, Uretdiondiisocyanaten auf Basis dieser einfachen Diisocyanate, Urethan- und/oder Alophanatgruppen aufweisenden Polyisocyanaten auf Basis dieser einfachen Diisocyanate, Biuretgruppen aufweisenden Polyisocyanaten auf Basis von 1,6-Diisocyanatohexan, Bis-(6-isocyanatohexyl)-oxadiazintrion oder Gemischen dieser Polyisocyanate. Zur hydrophilen Modifizierung werden als Polyetheralkohole (i) vorzugsweise Alkoxylierungsprodukte von einwertigen Alkoholen mit 1 bis 6 Kohlenstoffatomen wie bespielsweise Methanol, Ethanol, n-Butanol oder n-Hexanol des Molekulargewichtsbereichs 480 bis 2480 eingesetzt, bei deren Herstellung als Alkylenoxide Ethylenoxid, gegebenenfalls im Gemisch mit bis zu 50 Gew.-%, bezogen auf Gemisch, an Propylenoxid eingesetzt werden. Die hydrophil modifizierten Polyisocyanate der Komponente B) weisen im allgemeinen einen Gehalt an freien Isocyanatgruppen von 5 bis 25 Gew.-% auf.

Die Menge der Komponente B) wird im übrigen im Rahmen der gemachten Offenbarung vorzugsweise so bemessen, daß das NCO/OH-Äquivalentverhältnis, bezogen auf die Isocyanatgruppen der Komponente B) und die Hydroxylgruppen der Komponente A) bei 0,8:1 bis 2:1, vorzugsweise 1:1 bis 1,8:1 liegt.

Bei der Komponente C) handelt es sich um Magnesiumoxid oder Magnesiumhydroxid, vorzugsweise um Magnesiumoxid in feindisperser Form.

Bei der Komponente D) handelt es sich um Wasser.

Als gegebenenfalls mitzuverwendende Hilfs- und Zusatzmittel E) kommen beispielsweise in Betracht:
- Pigmente, wie beispielsweise Titandioxid, Eisenoxidrot, Chromoxid;
- Katalysatoren für die NCO/OH-Reaktion wie beispielsweise Dibutylzinndilaurat, Dibutylzinnmaleinat oder ZinnII-octoat;
- Verlaufshilfsmittel wie beispielsweise Butyldiglykol, N-Methylpyrrolidon, wasserverdünnbare Hochsieder;
- externe Emulgatoren wie beispielsweise Nonylphenolethoxylate, 3-Benzyl-4-hydroxybiphenyl -polyglykolether;
- Füllstoffe wie beispielsweise Montmorillonit, Calciumcarbonat, Alumosilikate, Talkum, Bariumsulfat.

Zur Herstellung der gebrauchsfertigen Beschichtungsmittel wird vorzusgweise so vorgegangen, daß die Komponente C) und die gegebenenfalls mitwerwendenden Hilfs- und Zusatzmittel E) in der Komponente A) fein verteilt, d.h. dispergiert bzw. (im Falle der Verwendung von löslichen Hilfs- und Zusatzmitteln E)) gelöst werden, worauf sich die Vereinigung mit der Polyisocyanatkomponente B) anschließt. Das so erhaltende Gemisch kann dann mit dem Wasser D) zum gebrauchsfertigen wäßrigen Beschichtungsmittel verrührt werden. Die auf diese Weise hergestellten erfindungsgemäßen Beschichtungsmittel weisen im allgemeinen eine Topfzeit von bis zu 6 Stunden auf. Ihre Verarbeitung erfolgt nach an sich bekannten Methoden der Beschichtungstechnologie wie beispielsweise Streichen, Walzen, Rollen oder Spritzen.

Als Substrate kommen insbesondere mineralische Substrate der bereits beispielhaft genannten Art in Betracht, wobei wegen des wäßrigen Charakters der erfindungsgemäßen Beschichtungsmittel die in diesen Substraten oftmals anzutreffende Feuchtigkeit den Beschichtungsvorgang nicht störend beeinflußt. Andere mögliche Substrate sind beispielsweise PVC, Bitumenpappe, Holz oder Polystyrolschaumstoffe. Es resultieren lichtechte Beschichtungen mit guter Chemikalien- und Abriebfestigkeit in Form von unpigmentierten Versiegelungen oder pigmentierten Lacken. Die Pigmentierung erfolgt zweckmäßigerweise über vorgefertigte Farbpasten, die als Komponenten E) oder als Teil der Komponente E) in Betracht kommen.

In den nachfolgenden Beispielen beziehen sich alle Prozentangaben, soweit nichts Anderslautendes vermerkt, auf das Gewicht.

### Beispiele

### Ausgangsmaterialien

### Polyhydroxylverbindungen A

- A1:: Propoxylierungsprodukt von Trimethylolpropan der OH-Zahl 380.
- A2:: Propoxylierungsprodukt eines Gemischs aus Sorbit und Glycerin der OH-Zahl 450 und der Hydroxylfunktionalität 4,6.
- A3:: Propoxylierungsprodukt eines Gemischs aus Sorbit und Propylenglykol der OH-Zahl 480 und der Funktionalität 4,5.

### Polyisocyanate B

- B1:: Zu 1000 g eines Isocyanuratgruppen aufweisenden Polyisocyanats mit einem NCO-Gehalt von 21,6 % und einer mittleren NCO-Funktionalität von 3,3, hergestellt durch katalytische Trimerisierung von 1,6Diisocyanatohexan unter anschließender Entfernung des nicht umgesetzten Überschusses an Ausgangsdiisocyanat bis zu einem Restgehalt von 0,3 % fügt man unter Rühren 80,8 g eines auf 50°C erwärmten Polyetheralkohols des Molekulargewichts 1145, hergestellt durch Ethoxylierung von n-Butanol. Man erwarmt auf 110°C und halt 2,5 h bei dieser Temperatur. Nach Abkühlen erhält man ein klares, gelbes, in Wasser dispergierbares Harz mit einem NCO-Gehalt von 18,4 % und einer Viskosität bei 23°C von 2500 mPa.s.
- B2:: Zu 500 g des Ausgangspolyisocyanats gemäß B1 gibt man unter Rühren bei Raumtemperatur 40 g eines Polyetheralkohols des Molekulargewichts 1210, hergestellt durch Ethoxylierung von 3-Ethyl-3-hydroxymethyloxetan und rührt anschließend 2 h bei 100°C. Man erhält eine klare, gelbe, Wasser dispergierbare Polyisocyanat-Zubereitung mit einem NCO-Gehalt von 19,0 % und einer Viskosität bei 23°C von 2600 mPa.s.
- B3:: Nach der Verfahrensweise gemäß B2, jedoch unter Verwendung von lediglich 26,3 g Polyetheralkohol pro 500 g Ausgangspolyisocyanat erhält man eine Polyisocyanat-Zubereitung mit einem NCO-Gehalt von 19,7 % und einer Viskosität bei 23°C von 3200 mPa.s.
- B4:: In Analogie zu B1 erhält man aus 95 Gew.-Teilen des Ausgangspolyisocyanats gemäß B1 und 5 Gew.-Teilen eines Polyetheralkohols des Molekulargewichts 740, hergestellt durch Ethoxylierung von Ethylenglykolmonomethylether eine Polyisocyanat-Zubereitung mit einem NCO-Gehalt von 19,6 Gew.-% und einer Viskosität bei 26°C von 1600 mPa.s.
- B5:: Entsprechend B1 erhält man aus 90 Gew.-Teilen des Ausgangspolyisocyanat gemäß B1 und 10 Gew.-Teilen eines Polyetheralkohols des Molekulargewichts 2150, hergestellt durch Alkoxylierung von n-Butanol unter Verwendung eines Gemischs aus Ethylenoxid und Propylenoxid im Gewichtsverhältnis 80:20, eine Polyisocyanat-Zubereitung mit einem NCO-Gehalt von 19,2 % und einer Viskosität bei 23°C von 2900 mPa.s.
- B6:: Entsprechend B1 erhält man aus (i) 90 Gew.-Teilen eines Gemischs aus dimerem und trimerem 1,6-Diisocyanatohexan, welches im wesentlichen aus einem Gemisch aus Bis-(6-isocyanatohexyl)-uretdion und Tris-(6-isocyanatohexyl)-isocyanurat besteht und bei 23°C eine Viskosität von 150 mPa.s und einen NCO-Gehalt von 21,6 % und eine mittlere NCO-Funktionalität von 2,6 aufweist und (ii) 10 Gew.-Teilen eines einwertigen Polyetheralkohols des Molekulargewicht 1210, hergestellt durch Ethoxylierung von 3-Ethyl-3-hydroxymethyloxetan eine Polyisocyanat-Zubereitung mit einem NCO-Gehalt von 19,2 % und einer Viskosität bei 23°C von 200 mPa.s.
- B7:: Entsprechend B1 erhält man aus 92,5 Gew.-Teilen des Ausgangspolyisocyanats gemäß B6 und 7,5 Gew.-Teilen des Polyetheralkohols gemäß B1 eine Polyisocyanat-Zubereitung mit einem NCO-Gehalt von 19,5 % und einer Viskosität bei 23°C von 220 mPa.s.

### Beispiel 1

In 83,3 Gew.-Teilen des Polyetherpolyols A1 werden 16,7 Gew.-Teile Magnesiumoxid mit einem mittleren Teilchendurchmesser von ca. 30 µm fein dispergiert. Diese Zubereitung weist einen Hydroxylgruppengehalt von 9,6 % und eine Viskosität bei 23°C von 1500 mPa.s auf.

26,7 Gew.-Teile dieser Magnesiumoxid enthaltenden Polyol-Zubereitung werden mit 16,7 Gew.-Teilen einer grauen Pigmentpaste (handelsübliche Pigmentpaste, bestehen im wesentlichen aus in Wasser dispergiertem Titandioxid, Eisenoxidrot und Chromoxidgrün), 3,3 Gew.-Teilen einer 10 %igen Lösung in Butyldiglykolacetat von DioctylzinnIV-maleinat, 20,0 Gew.-Teilen Wasser und 33,3 G.w.-Teilen der Polyisocyanat-Zubereitung B2 zu einem erfindungsgemäßen Beschichtungsmittel verrührt.

Das so erhaltende Beschichtungsmaterial weist einen hohen Festkörpergehalt von 72 % auf. Die Viskosität im DIN-4-Becher liegt bei 180 sec. Das Beschichtungsmittel läßt sich durch weitere Zugabe von Wasser praktisch beliebig unter Viskositätserniederigung verdünnen. Mit dieser Verdünnung geht eine Erhöhung der Topfzeit einher.

Diese Zusammenhänge gehen aus nachstehend tabellarischen Zusammenfassung hervor.

| Verdünnung mit Wasser | Festkörpergehalt | Auslaufzeit DIN-4-Becher | Verarbeitungszeit |
|---|---|---|---|
| ohne | 72 % | 180 sec | ca. 2 Std. |
| 6,7 % | 67 % | 105 sec | ca. 2,5 Std. |
| 13,3 % | 63 % | 50 sec | ca. 4 Std. |
| 20,0 % | 60 % | 24 sec | ca. 5 Std. |

Aus diesen Beschichtungsmitteln lassen sich ohne Schwierigkeiten blasenfreie Beschichtungen mit einer Trockenfilmstärke von bis zu 400 µm herstellen.

Weitgehend analoge Resultate werden unter Verwendung der Polyisocyanatzubereitungen B1 bzw. B3-B7 in äquivalenten Mengen erhalten.

### Beispiel 2

Beschichtungsmittel entsprechend Beispiel 1, jedoch unter Verwendung von 22,6 Gew.-Teilen des Polyetherpolyols A2 anstelle der 26,7 Gew.-Teile Polyetherpolyol A1.

### Beispiel 3

Beschichtungsmittel entsprechend Beispiel 1, jedoch unter Verwendung von 21,1 Gew.-Teilen Polyetherpolyol A3 anstelle der 26,7 Gew.-Teile Polyetherpolyol A1.

### Beispiel 4

Beschichtungsmittel entsprechend Beispiel 1, jedoch unter Verwendung von 34,5 Gew.-Teilen der Polyisocyanat-Zubereitung B1 anstelle der 33,3 Gew.-Teile der Polyisocyanat-Zubereitung B2.

Die Beschichtungsmittel gemäß Beispielen 2 bis 4 weisen bei Raumtemperatur jeweils eine Topfzeit von ca. 4 h auf und gestatten die Herstellung von schaumfreien Beschichtungen mit sehr guten Filmeigenschaften.

Zur Untersuchung der Wasserbeständigkeit der aus den Beschichtungsmitteln 1 bis 4 hergestellten Beschichtungen wurden in Anlehnung an DIN 52617 Zementmörtel-Probekörper der Abmesssung 8 x 14 cm mit einem dreischichtigen Anstrichaufbau versehen. Die erste Schicht wurde als stark verdünnter Tiefgrund (Festkörpergehalt 36 %) aufgestrichen, während die zwei folgenden Deckanstriche unverdünnt aufgestrichen wurden. Die Trockenfilmdicke der ausgehärteten Anstriche lag bei 150 µm. Nach 10 Tagen Lagerung bei Raumtemperatur wurden die Probekörper in der Weise mit Wasser in Kontakt gebracht, daß die beschichtete Prüffläche von 112 cm² ständig benetzt war. Die Gewichtszunahme, die die Wasseraufnahme zeigt, wurde in Abhängigkeit von der Zeit durch Wägen ermittelt. Aus diesen Ergebnissen kann die Wasseraufnahme in g/m² Prüffläche errechnet werden. Diese Werte sind in nachstehender Tabelle zusammengefaßt.

| Beispiel | Wasseraufnahme (g/m²)nach | | | |
|---|---|---|---|---|
| | 1 h | 4 h | 8 h | 24 h |
| 1 | 35,7 | 35,7 | 53,6 | 62,5 |
| 2 | 26,8 | 35,7 | 44,6 | 62,5 |
| 3 | 26,8 | 26,8 | 44,6 | 53,6 |
| 4 | 33,5 | 34,8 | 46,1 | 54,9 |
| Vergleich (unbeschichtet) | 937 | 1116 | 1268 | 1393 |

## Patentansprüche

1. Wäßriges Beschichtungsmittel bestehend im wesentlichen aus
A) 100 Gew.-Teilen einer wasserlöslichen Polyether-Komponente einer (mittleren) Hydroxylfunktionalität von mindestens 2,5 und einer (mittleren) Hydroxylzahl von 100 bis 600, bestehend aus mindestens einem Polyetherpolyol
B) 40 bis 240 Gew.-Teilen einer wasserlöslichen oder -dispergierbaren Polyisocyanat-Komponente, bestehend aus mindestens einem nichtionisch-hydrophil modifiziertem organischen Polyisocyanat mit (cyclo)aliphatisch gebundenen Isocyanatgruppen,
C) 10 bis 50 Gew.-Teilen Magnesiumoxid und/oder -hydroxid in feindisperser Form,
D) 50 bis 150 Gew.-Teilen Wasser
und gegebenenfalls
E) weiteren Hilfs- und Zusatzmitteln der Lacktechnologie.

2. Verwendung des Beschichtungsmittels gemäß Anspruch 1 zur Beschichtung von mineralischen Substraten.

## Claims

1. Aqueous coating material consisting essentially of
A) 100 parts by weight of a water-soluble polyether component having an (average) hydroxyl functionality of at least 2.5 and an (average) hydroxyl number of 100 to 600, consisting of at least one polyether polyol
B) from 40 to 240 parts by weight of a water-soluble or water-dispersible polyisocyanate component, consisting of at least one nonionically/ hydrophilically modified organic polyisocyanate having (cyclo)aliphatically bonded isocyanate groups,
C) from 10 to 50 parts by weight of magnesium oxide and/or hydroxide in finely dispersed form,
D) from 50 to 150 parts by weight of water
and optionally
E) other auxiliary substances and additives used in coating technology.

2. Use of the coating material according to claim 1 for the coating of mineral substrates.

## Revendications

1. Agent de revêtement aqueux, composé essentiellement de
A) 100 parties en poids d'un composant polyéther hydrosoluble ayant une fonctionnalité hydroxyle (moyenne) d'au moins 2,5 et un indice hydroxyle (moyen) de 100 à 600, composé d'au moins un polyétherpolyol,
B) 40 à 240 parties en poids d'un composant polyisocyanate soluble ou dispersible dans l'eau, composé d'au moins un polyisocyanate organique modifié de façon à être non ionique et hydrophile, comportant des groupements isocyanate liés (cyclo)aliphatiquement,
C) 10 à 50 parties en poids d'oxyde et/ou d'hydroxyde de magnésium sous une forme finement divisée,
D) 50 à 150 parties en poids d'eau
et le cas échéant
E) d'autres adjuvants et additifs du secteur des laques et vernis.

2. Utilisation de l'agent de revêtement selon la revendication 1 pour revêtir des subjectiles minéraux.
